# EUROPEAN PATENT SPECIFICATION

(11) **EP 1 841 602 B1**
(45) Date of publication and mention of the grant of the patent: **11.01.2012**
(21) Application number: 06700949.8
(22) Date of filing: 25.01.2006
(51) Int. Cl.: B44B 5/02, B23P 19/00, B65G 47/00, G07D 9/00

(54) **PRESSING SYSTEM**
PRESSSYSTEM
SYSTEME DE PRESSAGE

(30) Priority: 26.01.2005 GB 0501594
(43) Date of publication of application: 10.10.2007
(73) Proprietor: THE SOLICITOR FOR THE AFFAIRS OF HER MAJESTY'S TREASURY, Llantrisant, Pontyclun CF72 8YT (GB)
(72) Inventor: GREGORY, Stephen c/o The Royal Mint, Pontyclun CF72 8YT (GB)
(74) Representative: Lambert, Ian Robert
(86) International application number: PCT/GB2006/000233
(87) International publication number: WO 2006/095120

(56) References cited:
- EP-A- 0 320 731
- DE-A1- 3 339 387
- DE-C- 823 389
- FR-A- 1 043 382
- GB-A- 2 311 952
- US-A- 4 362 176

## Description

The present invention relates to a pressing system for pressing blanks in a coining, stamping or other press forming process.

Known press forming techniques for use, for example, in the coin manufacturing industry use a rotary pressing table (frequently known as a rotary dial plate table) having a vertical rotary axis about which the table rotates. The dial plate table has a series of circumferentially spaced blank receiving stations which pass by a feed outlet at which a respective blank is fed into a respective receiving station. The table is then rotated to a pressing station at which a press forming operation (coin stamping) is carried out. The table indexes rotationally with sufficient dwell time for loading of the blanks into the receiving stations from the feed outlet and performance of the pressing operation. Conventionally, the blanks are fed from an elevated hopper or bowl store (which is periodically loaded with blanks), downwardly into a vertical guide tube to form an upright column or stack of the blanks. Blanks are then fed from the bottom of the vertical stack by means of a reciprocating finger which on its forward stroke forces the lowermost blank sideways from the stack at the feed outlet and into the adjacent dial plate table receiving station.

Such an apparatus is known e.g. from GB-A-2311952.

The prior art system described requires complex timing of the reciprocating finger to pare off the lowermost blank from the stack at the precise moment the dial plate receiving station is in position. This results in frequent failure due to mechanical problems and mis-timing which results in down time to repair. Changeover to run the system for blanks of different sizes requires the stack guide tube, and dial plate receiving station arrangement to be reset. This results in the receiving station distribution about the circumference of the dial plate table changing and as a result the timing of the reciprocating finger of the feed system is required to be altered. This changeover procedure is time consuming and results in significant down time.

GB2311952 discloses an arrangement for pressing blanks which comprises a feed unit for blanks which feeds blanks into a press. The arrangement further comprises an electrically operated driving device which is coupled with a feeding device and a control arrangement connected to the driving device arranged to monitor the operation of the press so as to operate the electrically operated driving device in synchronisation with the operation of the press.

An improved technique has now been devised.

According to a first aspect of the present invention provides pressing apparatus for pressing blanks in according to claim 1.

According to a first aspect, the invention provides a press forming process in which blanks are fed from a receptacle store of blanks to a rotary pressing table, according to claim 9.

It is preferred that the blanks comprise disc form elements having opposed major faces and a minor dimension thickness edge. In this context disc form should be read as encompassing within its scope circular, hexagonal octagonal or other polygonal shaped generally flat blanks, having opposed major faces.

Desirably, the rotary pressing table has an upwardly extending axis of rotation. This enables the blanks to be retained on the table by gravity.

Beneficially, the guide conduit extends transversely to the axis rotation of the pressing table, preferably substantially horizontally (although a slight incline may be permissible, or even aid in progressing the blanks toward the table, if inclined in that direction).

The blanks pass along the guide conduit in edge to edge file relationship, preferably in single file. Preferably, the motion of the blank in passing into the receiving station of the rotary pressing table is in the same general direction as the motion of the blank along the conduit.

The guide conduit is preferably elongate (more preferably generally straight), the blanks desirably moving in a direction in-line with the conduit in passing into the blank receiving station of the rotary pressing table. Desirably the feed system (preferably the guide conduit) has gauging means for rejecting oversize and/or undersize blanks. The gauging means may include an aperture in the conduit through which undersize blanks fall.

Advantageously, the blanks are fed directly to the guide conduit from the receptacle store, in file one behind another. The store receptacle preferably includes a dispensing arrangement for dispensing the blanks in file in edge to edge relationship, to the guide conduit. Desirably, a rotary/centrifugal arrangement urges the blanks to be dispensed from the store receptacle.

It is preferred that the feed system includes a biassing arrangement operational to bias blanks in the guide conduit in the direction of the rotary pressing table. The biassing arrangement preferably comprises a drive arrangement operational to drive blanks in the guide conduit in the direction of the rotary pressing table. The drive arrangement may include an actuator arranged to contact the surface of the blanks in the guide conduit, preferably the underside surface of the blanks filing along the guide channel. The drive arrangement contacting the underside of the blanks is preferred because it requires less re-organisation of apparatus parts when changing over the apparatus to deal with blanks of differing thickness. In one embodiment, it is preferred that an endless belt drive is provided to contact and drive the blanks in file in the guide conduit.

Alternatively, the drive arrangement may comprise a non-contact drive arrangement, such as a linear induction motor, preferably positioned to extend in-line below the guide conduit. By using an induction motor, the number of moving parts for the apparatus is reduced aiding in ease of assembly, re-assembly and down time during maintenance or changeover.

Beneficially, the rotary pressing table rotates between successive positions in which blanks are urged to pass via the exit of the guide conduit into successive receiving stations of the rotary pressing table. A plurality of receiving stations are preferably provided on the rotary pressing table, each beneficially comprising a receiving recess provided in a sector element mounted to the surface of the table. Desirably, receiving stations are replaceable on the rotary table to fit receiving stations for receipt of blanks of varying dimensions.

The invention will now be further described in a specific embodiment by way of example only and with reference to the following drawings, in which;
Figure 1 is a schematic representation of a prior art pressing system;
Figure 2 is a schematic representation of apparatus in accordance with the invention;
Figure 3 is a perspective view of apparatus in accordance with the invention; and
Figure 4 is an underside perspective view of an alternative embodiment of apparatus in accordance with the invention.

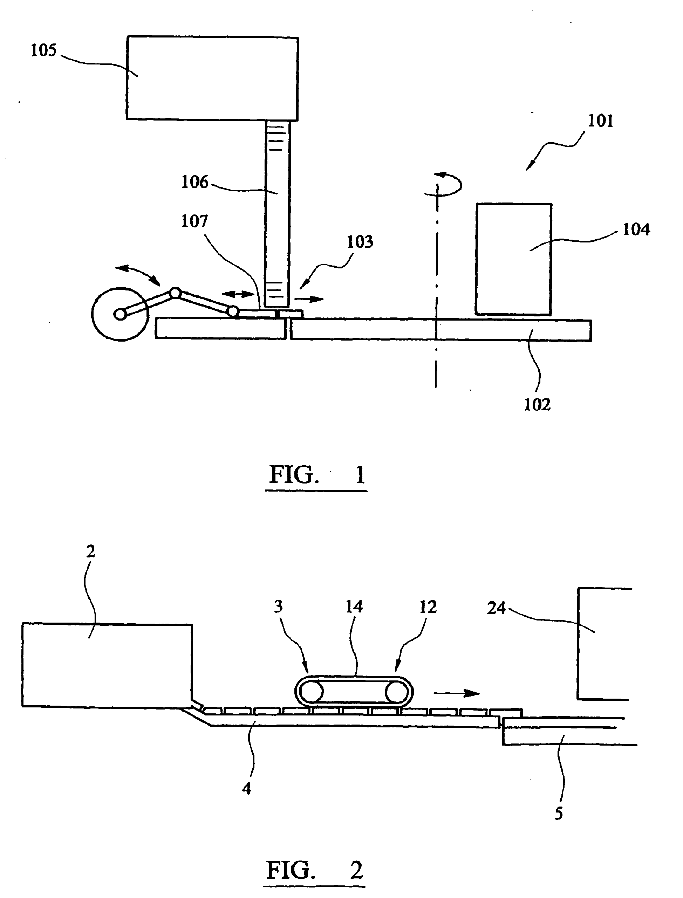

Referring to the drawings and initially to the prior art system of figure 1, there is shown pressing apparatus (101) including a rotary dial plate pressing table (102) having a vertical rotary axis about which the table rotates. The dial plate table (102) has a series of circumferentially spaced blank receiving stations which pass by a feed outlet (103) at which a respective blank is fed into a respective receiving station. The table is then rotated to carry the blanks to a pressing station (104) at which a press forming operation (coin stamping) is carried out. The table indexes rotationally with sufficient dwell time for loading of the blanks into the receiving stations from the feed outlet and performance of the pressing operation. The blanks are fed from an elevated hopper or bowl store (105) which is periodically loaded with blanks, and pass downwardly into a vertical guide tube (106) to form an upright column or stack of the blanks. Blanks are then fed from the bottom of the vertical stack by means of a reciprocating finger (107) which on its forward stroke forces the lowermost blank sideways from the stack at the feed outlet and into the adjacent dial plate table receiving station.

The prior art system described requires complex timing of the reciprocating finger (107) to pare off the lowermost blank from the stack at the precise moment the dial plate receiving station is in position. This results in frequent failure due to mechanical problems and mis-timing which results in down time to repair. Changeover to run the system for blanks of different sizes requires the stack guide tube, and dial plate receiving station arrangement to be reset. This results in the receiving station distribution about the circumference of the dial plate table changing and as a result the timing of the reciprocating finger of the feed system is required to be altered. This changeover procedure is time consuming and results in significant down time.

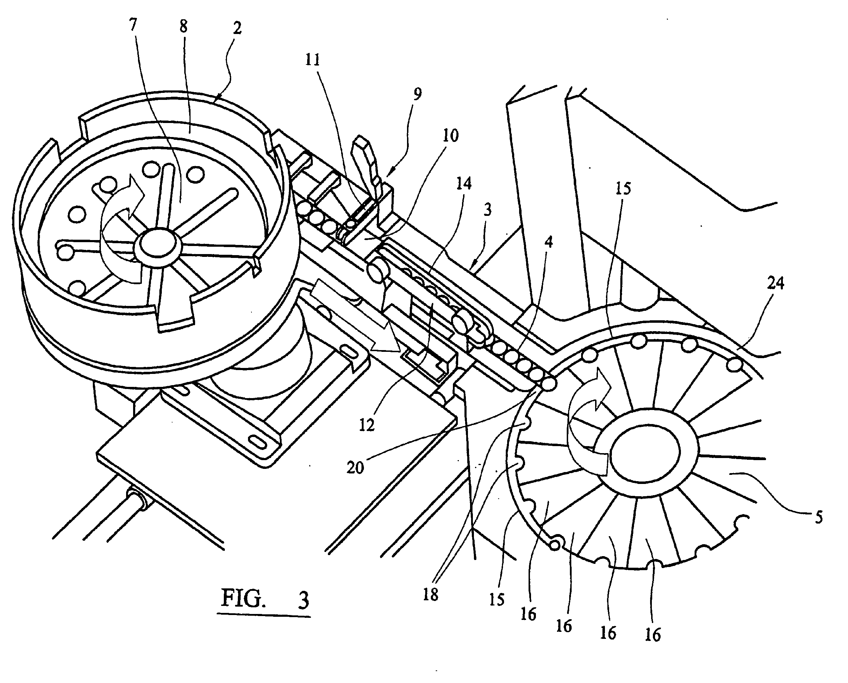

Turning now to the system of the present invention as shown in figures 2 and 3. The apparatus 1 comprises a rotary feed bowl (2), a feed system (3) including a guide feed channel (4) extending horizontally from the feed bowl (2) and a rotary dial plate table (5) (having a vertical rotary axis) positioned at the distal end of the guide feed channel (4). Blanks are periodically loaded into the feed bowl and dispensed from the feed bowl to pass along the guide feed channel in single file (in edge to edge relationship). The feed bowl has a rotary base (7) which rotates and agitates the blanks. A peripheral lip (8) ensures that only blanks which are orientated lying on a major face can pass under the influence of centrifugal force to a peripheral circumferential outlet (not shown). The feed bowl outlet is lined up with the proximal end of guide channel (4) The guide channel (4) can be varied in width to facilitate pressing runs of blanks of different sizes. A gauge arrangement (9) includes an aperture (10) in the base of the channel sized to ensure that blanks undersize by more than a given tolerance level are rejected by falling through the aperture (10). A deflection arm (11) also ensures that over-thickness blanks are deflected into a reject channel. The blanks are initially fed along the guide channel in single file by means of being pushed from the blank behind. In effect therefore the rotary drive of the feed bowl is the input driver to cause the blanks to move along the guide channel (4). However the guide channel (4) feed system includes a drive arrangement in the form of an endless belt drive (12). The belt (14) of the belt drive (12) contacts the upper surface of the single file blanks in the guide channel and urges them in the direction of the dial plate table (5). The end length of the guide channel (4) is horizontal and leads to a level entry/crossover point 20 at which the blanks are transferred to the dial plate table (5). The dial plate table (5) includes a circumferential edge (15), and an upper surface which has a series of sector elements (16) fixed to the table (5), each sector element including a circumference facing receiving recess (18) (receiving station) shaped and dimensioned to receive a single blank. When the dial plate table (5) is in a rotary position such that an empty receiving recess (18) of a respective slot is lined up at the cross over point (20) with the end of the guide channel (4), the endmost blank is urged by rearward force to move to enter and occupy the recess (18). The table then turns and the next in line blank is forced into abutment with the circumferential edge (15) of the dial plate table (5) awaiting the next vacant recess (18) to line up at the cross over point (20). The endless belt drive arrangement (12) performs the important function of ensuring that any spacing or gaps between blanks in the single file line in the guide channel (4) are closed. The apparatus operates at significant speed and it is important to ensure that the next in line blank at the crossover position (20) is always at the ready, in position at the end of channel (4), to be urged across to the dial plate table (5).

When in position on the table, the blanks are rotated to a pressing station (24) at which a press forming operation (for example coin stamping) is carried out. The table indexes rotationally with sufficient dwell time for loading of the blanks into the receiving stations (18) and performance of the pressing operation.

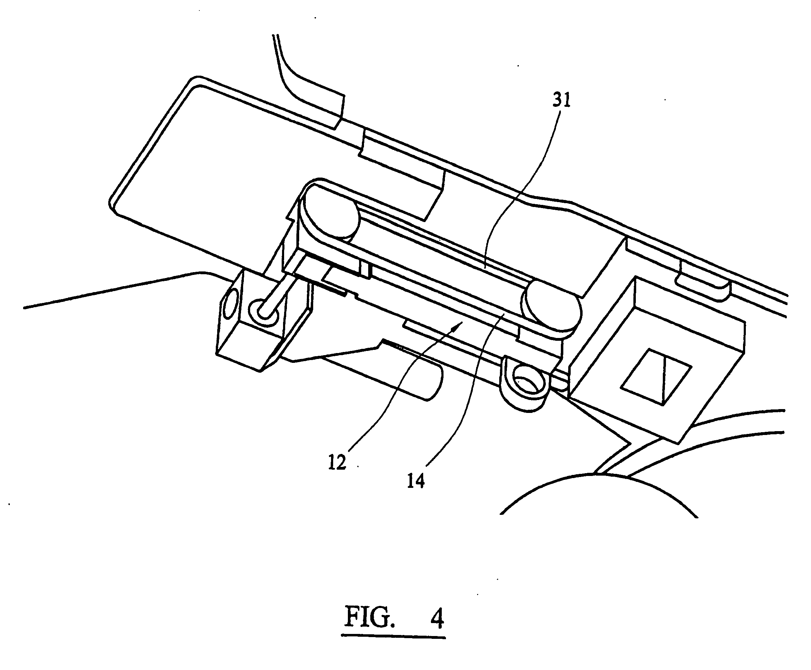

In the embodiment shown in figure 4, the endless belt drive arrangement (12) is positioned beneath the guide channel (4), the upper length of the belt protruding, through a slot (31) in the base of the guide channel. The belt moves at a speed greater than the speed at which the blanks pass along the guide channel (4) ensuring that lagging blanks in the channel are brought up to engage with leading blanks in a convenient manner. It has been found that positioning the drive arrangement beneath the line of travelling blanks, such that the blanks are supported on the drive belt improves the reliability of this aspect of the design. The guide belt slips beneath the edge to edge contacting, in file blanks in the guide slot. Additionally, the drive arrangement contacting the underside of the blanks is preferred because it requires less re-organisation of apparatus parts when changing over the apparatus to deal with blanks of differing thickness.

In an alternative embodiment, the drive arrangement may comprise a non-contact drive arrangement such as a linear induction motor, preferably positioned in-line below the guide conduit. By using an induction motor, the number of moving parts for the apparatus is reduced aiding in ease of assembly, re-assembly and down time during maintenance or changeover. The use of a linear motor also enables simple external adjustment of the drive speed.

The technique and system of the present invention does not require a complex timing arrangement to ensure transfer of blanks to the receiving station(18) at the dial plate table (5). Additionally, when the process run is converted to take blanks of a different size, there is no requirement to make timing adjustments or change feed tubes. The sector elements (16) are simply replaced with sector elements with appropriate sized receiving recesses and the width of the guide channel is adjusted. These features ensure that the operational down time is minimised.

## Claims

1. Pressing apparatus for pressing blanks in a coining, stamping or press forming operation, the apparatus including a rotary pressing table to which the blanks are fed, a store receptacle for the blanks and a feed system for feeding the blanks dispensed from the store receptacle to the rotary pressing table, **characterised in that** the feed system including a guide conduit into which the blanks pass following dispensing from the store receptacle and along which the blanks are urged to file one behind another in edge to edge file relationship to an exit from the guide conduit, the blanks passing directly from the conduit into a receiving station of the rotary pressing table, and wherein the guide conduit extends transversely to the axis of rotation of the pressing table.

2. Pressing apparatus according to claim 1, wherein:
i) the blanks comprise disc form elements having opposed major faces and a minor dimension thickness edge; and/or
ii) the rotary pressing table has an upwardly extending axis of rotation; and/or
iii) the guide conduit extends substantially horizontally.

3. Pressing apparatus according to claim 1 or claim 2, wherein:
i) the blanks pass along the conduit in single file; and/or
ii) the motion of the blank in passing into the receiving station of the rotary pressing table is in the same general direction as the motion of the blank along the conduit; and/or
iii) the guide conduit is elongate, the blank moving in a direction in-line with the conduit in passing into the blank receiving station of the rotary pressing table.

4. Pressing apparatus according to any preceding claim, wherein:
i) the blanks are fed directly to the guide conduit from the receptacle store, in file one behind another; and/or
ii) the store receptacle includes a dispensing arrangement for dispensing the blanks in file in edge to edge relationship, to the guide conduit; and/or
iii) the store receptacle includes rotary/centrifugal feed arrangement urging the blanks to be dispensed from the store receptacle; and/or
iv) the feed system includes a biasing arrangement operational to bias blanks in the guide conduit in the direction of the rotary pressing table.

5. Pressing apparatus according to any preceding claim, wherein:
i) the biasing arrangement comprises a drive arrangement operational to drive blanks in the guide conduit in the direction of the rotary pressing table, preferably wherein the drive arrangement includes an actuator arranged to contact the surface of the blanks in the guide conduit; and/or the drive arrangement includes a non-contact device (such as a linear induction motor) operational to drive blanks in the guide conduit; and/or the biasing system includes an endless belt drive arranged to contact the blanks in file in the guide conduit.

6. Pressing apparatus according to claim 5, wherein the actuator is located adjacent the underside surface of blanks in the guide channel.

7. Pressing apparatus according to any preceding claim, wherein:
i) the rotary pressing table rotates between successive positions in which blanks are urged to pass via the exit of the guide conduit into successive receiving stations of the rotary pressing table; and/or
ii) a plurality of receiving stations are provided on the rotary pressing table, each comprising a receiving recess provided in a sector element mounted to the surface of the table.

8. Pressing apparatus according to any preceding claim, wherein:
i) the receiving stations are replaceable on the rotary table to fit receiving stations for receipt of blanks of varying dimensions; and/or
ii) the rotary pressing table carries blanks to a pressing station where a press forming operation (such as coining or stamping) is carried out upon the blank.

9. A press forming process in which blanks are fed from a receptacle store of blanks to a rotary pressing table, the blanks passing from the receptacle store into a guide conduit along which guide conduit the blanks are urged to file one behind another in edge to edge file relationship to an exit from the guide conduit, the blanks passing directly from the guide conduit into a receiving station of the rotary pressing table, wherein the guide extends transversely to the axis of rotation of the pressing table.

## Patentansprüche

1. Preßvorrichtung zum Pressen von Rohlingen in einem Präge-, Stanz- oder Preßverfahren, mit einem Preß-Drehtisch, dem die Rohlinge zugeführt werden, einem Lager für die Aufnahme der Rohlinge und einem Fördersystem zur Zuführung der Rohlinge, die von dem Lager abgegeben werden, um von dem Preß-Drehtisch aufgenommen zu werden, **dadurch gekennzeichnet, daß** das Fördersystem eine Führungsleitung aufweist, in die sich die Rohlinge nach der Ausgabe von dem aufnehmenden Lager bewegen und entlanggedrückt werden, so daß sie sich hintereinander, Rand an Rand, zu einem Ausgang aus der Führungsleitung bewegen, wobei die Rohlinge direkt von der Leitung in eine Aufnahmestation des Preß-Drehtisches laufen, und wobei die Führungsleitung sich quer zu der Drehachse des Preßtisches erstreckt.

2. Preßvorrichtung nach Anspruch 1, **dadurch gekennzeichnet, daß**
i) die Rohlinge scheibenförmige Elemente mit entgegengesetzten Hauptflächen und einer gering bemessenen Randdicke bilden; und / oder
ii) der Preß-Drehtisch eine sich nach oben erstreckende Drehachse aufweist; und / oder
iii) die Führungsleitung sich im wesentlichen waagerecht erstreckt.

3. Preßvorrichtung nach Anspruch 1 oder 2, **dadurch gekennzeichnet, daß**
i) die Rohlinge sich entlang der Leitung in einer einzelnen Reihe bewegen; und / oder
ii) die Bewegung der Rohlinge beim Lauf in die Aufnahmestation des Preß-Drehtisches in derselben allgemeinen Richtung erfolgt wie die Bewegung der Rohlinge längs der Leitung; und / oder
iii) die Führungsleitung länglich ist und sich die Rohlinge in einer Richtung innerhalb der Leitung bewegen, in der sie in die Rohling-Aufnahmestation des Preß-Drehtisches laufen.

4. Preßvorrichtung nach einem der vorhergehenden Ansprüche, **dadurch gekennzeichnet, daß**
i) die Rohlinge direkt von dem Aufnahmelager in Reihe, einer hinter dem anderen zu der Führungsleitung gefördert werden; und / oder
ii) das Aufnahmelager eine Ausgabe-Anordnung zum Ausgeben der Rohlinge in Reihe, Rand an Rand, an die Führungsleitung aufweist; und / oder
iii) das Aufnahmelager eine rotierende Zentrifugalförder-Anordnung aufweist, die die Rohlinge unter Krafteinwirkung dazu bringt, von dem Aufnahmelager ausgegeben zu werden; und oder
iv) das Fördersystem eine Druck-Anordnung aufweist, die so arbeitet, daß sie die Rohlinge in Richtung des Preß-Drehtisches in die Führungsleitung drückt.

5. Preßvorrichtung nach einem der vorhergehenden Ansprüche, **dadurch gekennzeichnet, daß**
i) die Druck-Anordnung eine Antriebs-Anordnung aufweist, die so arbeitet, daß sie die Rohlinge in Richtung des Preß-Drehtisches in der Führungsleitung antreibt, und zwar vorzugsweise dann, wenn die Antriebs-Anordnung einen Antrieb aufweist, der so angeordnet ist, daß er die Oberfläche der Rohlinge in der Führungsleitung berührt; und / oder
die Antriebs-Anordnung eine kontaktlose Einrichtung aufweist (beispielsweise einen linearen Induktionsmotor), der so arbeitet, daß er die Rohlinge in der Führungsleitung antreibt; und / oder
das Drucksystem mit einem endlosen Transmissionsantrieb versehen ist, der so angeordnet ist, daß er die in Reihe befindlichen Rohlinge in der Führungsleitung berührt.

6. Preßvorrichtung nach Anspruch 5, **dadurch gekennzeichnet, daß** der Antrieb sich an der unteren Oberfläche der Rohlinge im Führungskanal befindet.

7. Preßvorrichtung nach einem der vorhergehenden Ansprüche, **dadurch gekennzeichnet, daß**
i) der Preß-Drehtisch sich zwischen aufeinanderfolgenden Positionen dreht, in denen die Rohlinge unter Druck gesetzt werden, so daß sie über den Ausgang der Führungsleitung in aufeinanderfolgende Empfangsstationen des Preß-Drehtisches laufen; und / oder
ii) mehrere Empfangsstationen auf dem Preß-Drehtisch vorgesehen sind, von denen jede eine aufnehmende Vertiefung aufweist, die sich in einem Sektorelement befindet, das auf der Tischoberfläche angebracht ist.

8. Preßvorrichtung nach einem der vorhergehenden Ansprüche, **dadurch gekennzeichnet, daß**
i) die Aufnahmestationen auf dem Preß-Drehtisch so ersetzbar sind, daß sie zur Aufnahme von Rohlingen unterschiedlicher Abmessungen passen; und / oder
ii) der Preß-Drehtisch die Rohlinge zu einer Preßstation trägt, in der an den Rohlingen ein Preßformungs-Vorgang (beispielsweise Prägen oder Stanzen) ausgeführt wird.

9. Preßformungs-Verfahren, bei dem Rohlinge von einem Aufnahmelager für Rohlinge zu einem Preß-Drehtisch gefördert werden, wobei die Rohlinge, die von dem Aufnahmelager in eine Führungsleitung laufen, entlang derer sie unter Krafteinwirkung einer hinter dem anderen aufgereiht, Rand an Rand von der Führungsleitung zu einem Ausgang gefördert werden, wobei die Rohlinge direkt von der Führungsleitung in eine Aufnahmestation des Preß-Drehtellers laufen, und sich die Führungsleitung quer zur Drehachse des Preßtisches erstreckt.

## Revendications

1. Appareil de pressage pour presser des ébauches dans une opération de matriçage, d'estampage ou de moulage par pression, l'appareil comprenant une table de pressage rotative à laquelle les ébauches sont amenées, un réceptacle de stockage pour les ébauches et un système d'alimentation pour amener les ébauches distribuées par le réceptacle de stockage à la table de pressage rotative, **caractérisé en ce que** le système d'alimentation comprend un conduit de guidage dans lequel les ébauches passent après la distribution par le réceptacle de stockage et le long duquel les ébauches sont poussées pour se suivre l'une derrière l'autre, dans une relation bord contre bord, vers une sortie du conduit de guidage, les ébauches passant directement du conduit dans une station de réception de la table de pressage rotative, et dans lequel le conduit de guidage s'étend de manière transversale vers l'axe de rotation de la table de pressage.

2. Appareil de pressage selon la revendication 1, dans lequel :
i) les ébauches comprennent des éléments en forme de disque ayant des faces majeures opposées et un bord d'épaisseur de dimension inférieure ; et/ou
ii) la table de pressage rotative a un axe de rotation s'étendant vers le haut ; et/ou
iii) le conduit de guidage s'étend sensiblement horizontalement.

3. Appareil de pressage selon la revendication 1 ou 2, dans lequel :
i) les ébauches passent le long du conduit sur une seule file ; et/ou
ii) le mouvement de l'ébauche en passant dans la station de réception de la table de pressage rotative se fait dans la même direction générale que le mouvement de l'ébauche le long du conduit ; et/ou
iii) le conduit de guidage est allongé, l'ébauche se déplaçant dans une direction en ligne avec le conduit en passant dans la station de réception de l'ébauche de la table de pressage rotative.

4. Appareil de pressage selon l'une quelconque des revendications précédentes, dans lequel :
i) les ébauches sont amenées directement au conduit de guidage depuis le réceptacle de stockage, en file l'une derrière l'autre : et/ou
ii) le réceptacle de stockage comprend un dispositif de distribution pour distribuer les ébauches en file dans une relation bord contre bord, jusqu'au conduit de guidage ; et/ou
iii) le réceptacle de stockage comprend un dispositif d'alimentation rotatif/centrifuge poussant les ébauches à distribuer depuis le réceptacle de stockage ; et/ou
iv) le système d'alimentation comprend un dispositif d'inclinaison opérationnel pour incliner les ébauches dans le conduit de guidage dans la direction ce la table de pressage rotative.

5. Appareil de pressage selon l'une quelconque des revendications précédentes, dans lequel :
i) le dispositif d'inclinaison comprend un dispositif de commande opérationnel pour entraîner les ébauches dans le conduit de guidage dans la direction de la table de pressage rotative, de préférence dans lequel le dispositif de commande comprend un actionneur disposé de façon à entrer en contact avec la surface des ébauches dans le conduit de guidage : et/ou le dispositif de commande comprend un dispositif sans contact (comme un moteur à induction linéaire) opérationnel pour conduire les ébauches dans le conduit de guidage ; et/ou le système d'inclinaison comprend une commande à courroie sans fin disposée de façon à entrer en contact avec les ébauches en file dans le conduit de guidage.

6. Appareil de pressage selon la revendication 5, dans lequel l'actionneur est situé de manière adjacente à la surface inférieure des ébauches dans le canal de guidage.

7. Appareil de pressage selon l'une quelconque des revendications précédentes, dans lequel :
i) la table de pressage rotative tourne entre des positions successives dans lesquelles les ébauches sont poussées de façon à passer par la sortie du conduit de guidage dans des stations de réception successives de la table de pressage rotative ; et/ou
ii) une pluralité de stations de réception sont ménagées sur la table de pressage rotative, chacune comprenant une cavité de réception ménagée dans un élément de secteur monté sur la surface de la table.

8. Appareil de pressage selon l'une quelconque des revendications précédentes, dans lequel :
i) les stations de réception peuvent être remplacées sur la table rotative, de façon à installer des stations de réception permettant de recevoir des ébauches de dimensions différentes ; et/ou
ii) la table de pressage rotative transporte des ébauches à une station de pressage, où une opération de moulage sous presse (comme un matriçage ou un estampage) est réalisée sur l'ébauche.

9. Procédé de moulage sous presse, dans lequel les ébauches sont amenées d'un réceptacle de stockage d'ébauches vers une table de pressage rotative, les ébauches passant du réceptacle de stockage dans un conduit de guidage, le long duquel les ébauches sont poussées en file l'une derrière l'autre, dans une relation bord contre bord vers une sortie du conduit de guidage, les ébauches passant directement du conduit de guidage dans une station de réception de la table de pressage rotative, dans lequel le guide s'étend de manière transversale vers l'axe de rotation de la table de pressage.
